# EUROPEAN PATENT APPLICATION

(11) **EP 2 735 552 A1**
(43) Date of publication of application: **28.05.2014**
(21) Application number: 12007909.0
(22) Date of filing: 23.11.2012
(51) Int. Cl.: C03C 15/00, G06F 3/044

(54) **Cover glass structure and fabrication method thereof and touch-sensitive display device**

(71) Applicant: Wintek Corporation, 42760 Taichung City (TW)
(72) Inventor: Huang, Ping-Wen, TAI Chung City (TW); Wu, Ming-Kung, TAI Chung City (TW); Lee, Chia-Huang, TAI Ping City, TAI Chung County (TW); Hung, Jeng-Jye, TAI Ping City, TAI Chung County (TW); Chan, Chi-Yu, TAI Chung City (TW); Kuo, Heng Chia, TAI Chung County (TW)
(74) Representative: Becker Kurig Straus

(57) **Abstract**

A cover glass structure (20) includes a glass substrate (22), a touch-sensing structure (24) and a decorative layer. The glass substrate (22) has at least one cutting section, and the cutting section is etched to form an etched structure. The touch-sensing structure (24) is disposed on the glass substrate (22), and the decorative layer is disposed on the glass substrate (22).

## Description

### BACKGROUND OF THE INVENTION

### a. Field of the Invention

The invention relates to a cover glass structure, a fabrication method of the cover glass structure, and a touch-sensitive display device having the cover glass structure.

### b. Description of the Related Art

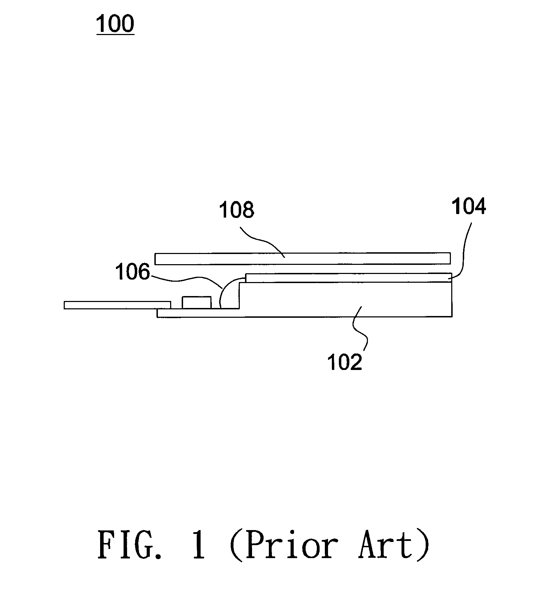

FIG. 1 shows a schematic diagram of a conventional touch-sensitive display device. Referring to FIG. 1, a touch panel 104 is embedded in a display panel 102. Multiple signal lines of the touch panel 104 are electrically connected to the display panel 102 through a flexible printed circuit board 106, and a cover glass 108 covers the touch panel 104. In the conventional touch-sensitive display device 100, the touch panel 104 typically includes a single-layer glass substrate or a double-layer glass substrate, and together with a cover glass covering the touch panel 104. As a result, the entire glass thickness is sufficient to prevent the impact of external forces. However, a new generation of touch panels often uses a single-layer glass substrate, and the cover glass 108 is no longer provided. Under the circumstance, when machining processes like cutting, edging and chamfering are performed on the single-layer glass substrate, a large amount of tiny cracks are formed on the periphery of the glass substrate to considerably reduce the glass strength. Therefore, when the glass substrate is bent or warped, the glass substrate is liable to break through the peripheral cracks and into the inside thereof.

### BRIEF SUMMARY OF THE INVENTION

The invention provides a cover glass structure, a fabrication method of the cover glass structure, and a touch-sensitive display device having the cover glass structure.

In order to achieve one or a portion of or all of the objects or other objects, one embodiment of the invention provides a cover glass structure including a glass substrate, a touch-sensing structure and a decorative layer. The glass substrate has at least one cutting section, and the cutting section is etched to form an etched structure. The touch-sensing structure is disposed on the glass substrate, and the decorative layer is disposed on the glass substrate.

In one embodiment, the decorative layer is disposed on the periphery of the glass substrate, and the material of the decorative layer includes at least one of diamond-like carbon, ceramic, colored ink, resin and photo resist.

In one embodiment, at least one functional film is disposed on at least one side of the glass substrate, and the functional film includes at least one of a polarizing sheet, an optical filter, an anti-glare film, an anti-reflection film, a polyethylene terephthala film and a hard coat film.

In one embodiment, the etched structure includes a plurality of notch structures, and each of the notch structures has an arc-shaped or a tooth-shaped profile. The etched structure is formed by the erosion of a dry-etching agent or a wet-etching agent.

In one embodiment, the touch-sensing structure includes a plurality of first sensing traces and a plurality of second sensing traces respectively formed on two opposite sides of the glass substrate.

According to another embodiment of the invention, a fabrication method of a cover glass structure including the steps of: forming a touch-sensing structure and a decorative layer on a glass substrate; performing machining processes on the glass substrate; and etching the periphery of the machined glass substrate to eliminate cracks formed on the periphery of the machined glass substrate.

According to another embodiment of the invention, a touch-sensitive display device includes a display panel and a cover glass structure attached to the display panel. The cover glass structure includes a glass substrate, a touch-sensing structure and a decorative layer. The glass substrate has at least one cutting section, and the cutting section is etched to form an etched structure. The touch-sensing structure is disposed on the glass substrate, and the decorative layer is disposed on the glass substrate.

According to the above embodiments, tiny cracks formed on the cutting section are etched to change into multiple notch structures having an arc-shaped or a tooth-shaped profile. That is, the sharp and pierced cracks suffer erosion to change into blunt notch structures. Therefore, when the machined glass substrate is bent or warped, the possibility of breaking through the periphery cracks is considerably reduced to increase averaged strength and B10 testing strength of the machined glass substrate. Further, since the cutting section of a machined glass substrate is etched to increase its strength, a thinner glass substrate may be used instead to still achieve competent glass strength.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

FIG. 1 shows a cross-sectional schematic diagram of a conventional touch panel.

FIG. 2 shows a schematic diagram of a touch-sensitive display device according to an embodiment of the invention.

FIG. 3 shows an enlarged schematic diagram illustrating a partial cutting section of a machined glass substrate without being etched.

FIG. 4 shows an enlarged schematic diagram illustrating a partial cutting section of a etched glass substrate.

FIG. 5 shows a plan view of a cover glass structure according to an embodiment of the invention.

FIG. 6A shows a cross-sectional schematic diagram of a cover glass structure according to an embodiment of the invention.

FIG. 6B shows a cross-sectional schematic diagram of a cover glass structure according to another embodiment of the invention.

FIG. 6C shows a cross-sectional schematic diagram of a cover glass structure according to another embodiment of the invention.

FIG. 6D shows a cross-sectional schematic diagram of a cover glass structure according to another embodiment of the invention.

FIG. 7 shows a cross-sectional schematic diagram of a cover glass structure according to another embodiment of the invention.

FIG. 8 shows a cross-sectional schematic diagram of a cover glass structure according to another embodiment of the invention, and FIG. 9 shows a schematic diagram of a barrier layer formed on a glass substrate.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

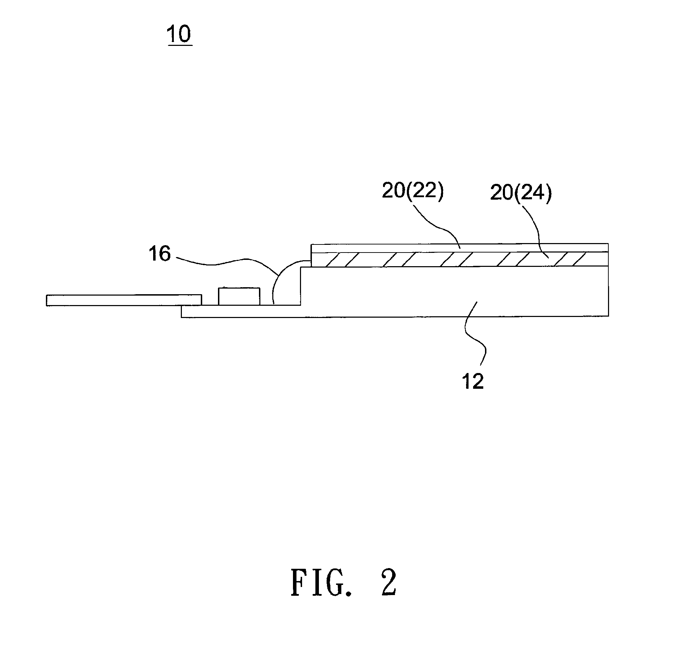

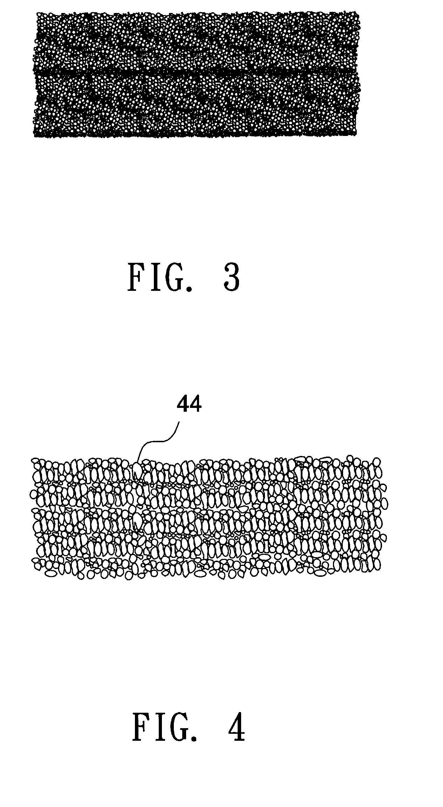

FIG. 2 shows a schematic diagram of a touch-sensitive display device according to an embodiment of the invention. Referring to FIG. 2, the touch-sensitive display device 10 includes a display panel 12 and a cover glass structure 20 attached to the display panel 12. Signal lines of the cover glass structure 20 are electrically connected to the display panel 12 through a flexible printed circuit board 16. In this embodiment, the cover glass structure 20 includes a single-layer glass substrate 22 and a touch-sensing structure 24 disposed on the glass substrate 22. The touch-sensing structure 24 may detect different touch operations, and the glass substrate 22 may be a raw glass substrate without being strengthened or a reinforced glass substrate. In typical glass machining processes, a large glass sheet is subject to cutting, edging, chamfering, etc to form the single-layer glass substrate 22 shown in FIG. 2. However, after the machining processes are performed, a large amount of tiny cracks are often formed on the periphery of the glass substrate 22 to considerably reduce the strength of the glass substrate 22. When the glass substrate 22 is bent or warped, the glass substrate 22 is liable to break through the peripheral cracks to the inside thereof. In this embodiment, the peripheral cracks formed on the glass substrate 22 as a result of cutting, edging and chamfering operations are removed by etching to increase the strength of a machined glass substrate. Further, in this embodiment, the method for removing the peripheral cracks on each cutting section of the glass substrate 22 includes, but is not limited to, dry-etching and wet-etching. For example, the dry-etching agent may include a fluorine-containing gas or plasma, and the wet-etching agent may include hydrofluoric (HF) acid or a fluorine-containing solvent. In one embodiment, the fluorine-containing solvent may contain at least one of sulfamic acid, ammonium persulfate, nonionic surfactant, hydrochloric acid, acetic acid, surfactant, distilled water, nitric acid, villiaumite, fluorine compound, hydrochloric acid, sulfuric acid, and phosphoric acid. FIG. 3 shows an enlarged schematic diagram illustrating a partial cutting section of a machined glass substrate without being etched with hydrofluoric acid. FIG. 4 shows an enlarged schematic diagram illustrating a partial cutting section of a machined glass substrate etched with hydrofluoric acid. As shown in FIG. 3 and FIG. 4, when a cutting section of a machined glass substrate is etched with hydrofluoric acid, tiny cracks formed on the cutting section are etched to change into multiple notch structures 44 having an arc-shaped or a tooth-shaped profile. That is, the sharp and pierced cracks suffer erosion to change into blunt notch structures 44. Therefore, when the machined glass substrate is bent or warped, the possibility of breaking through the periphery cracks is considerably reduced to increase averaged strength and B 10 testing strength of the machined glass substrate. In one embodiment, each of the notch structures 44 formed by etching is in the range of 10µm to 150µm.

According to the above embodiments, since the cutting section of a machined glass substrate is etched to increase its strength, a thinner glass substrate may be used instead to still achieve competent glass strength. Therefore, the entire cover glass structure 20 is allowed to be miniaturized. Note the reinforcement for a single-layer glass substrate of the cover glass structure 20 is merely illustrated as an example. The reinforced glass structure and its fabrication method may be used in different devices and environments. Different embodiments of a reinforced glass substrate serving as a glass substrate of a cover glass structure are described below.

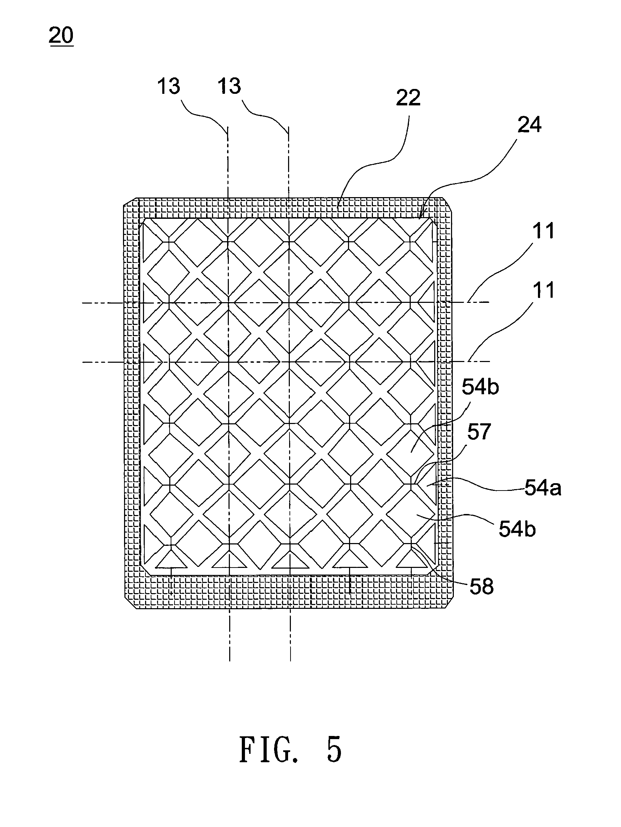

In the above embodiments, the touch-sensing structure 24 may be a single-layer electrode structure or a multi-layer electrode structure. The single-layer electrode structure may include a plurality of electrodes spaced apart from each other wherein the electrodes may have a regular shape such as a triangle, a line segment or rectangular segment, and may be composed of at least one of a conductive layer, a metal mesh layer and a nanowire layer. For example, the electrode may be composed of a conductive layer and a metal mesh layer stacked with each other. As shown in FIG. 5, in one embodiment, the touch-sensing structure 24 may include a plurality of first sensing series 11 and a plurality of second sensing series 13 spaced apart from the first sensing series 11. Each first sensing series 11 includes multiple first transparent electrodes 54a connected with each other by multiple first connecting lines 57, and each second sensing series 13 includes multiple second transparent electrodes 54b connected with each other by multiple second connecting lines 58. The transparent electrodes 54a and 54b may have a regular shape such as a diamond, a triangle or a line segment or may have an irregular shape, and may be composed of a transparent conductive layer, a metal mesh layer or a nanowire layer. The connecting lines 57 and 58 may be composed of at least one of a transparent conductive layer, a metal mesh layer and metal. For example, the connecting lines may be composed of a conductive layer and a metal mesh layer stacked with each other.

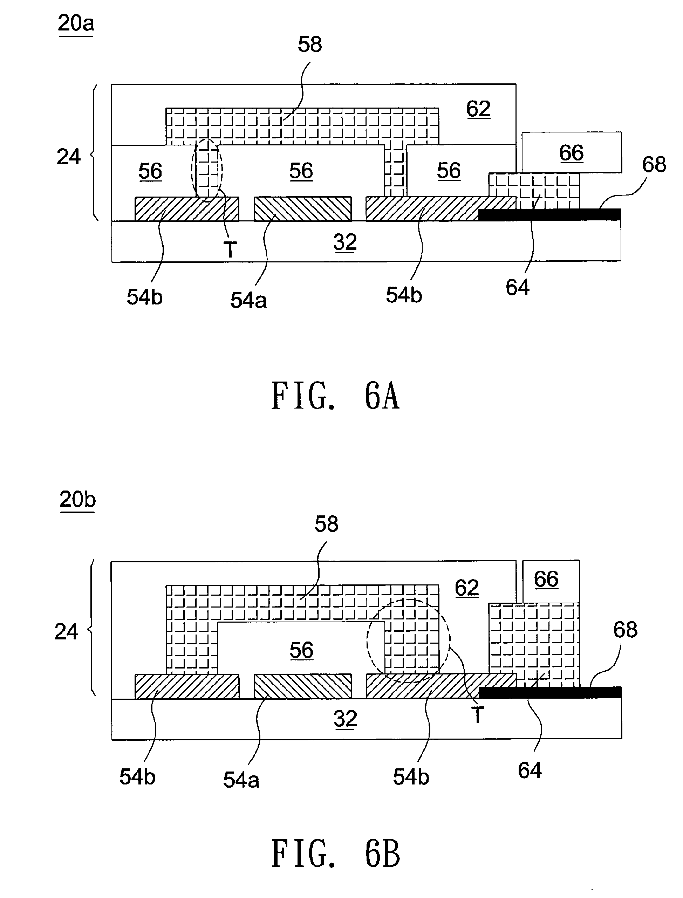

As shown in FIG. 6A, a cover glass structure 20a includes a reinforced glass substrate 32 and a touch-sensing structure 24 formed on the reinforced glass substrate 32. The reinforced glass substrate 32 is formed by etching a machined glass substrate. In this embodiment, the touch-sensing structure 24 has a bridge-via electrode structure. Referring to FIG. 5 and FIG. 6A, a plurality of first transparent electrodes 54a and a plurality of second transparent electrodes 54b are disposed on the reinforced glass substrate 32, the first transparent electrodes 54a may distribute along an X-axis direction at an equal distance and parallel to each other, and the second transparent electrodes 54b may distribute along a Y-axis direction at an equal distance and parallel to each other. An insulation layer 56 covers the first transparent electrodes 54a and the second transparent electrodes 54b and is provided with a plurality of via holes T to expose a part of the second transparent electrodes 54b. The two ends of the second connecting line 58 are electrically connected with different second transparent electrodes 54b separately through the via holes T. A passivation layer 62 is formed on one side of the touch-sensing structure 24 opposite the glass substrate 32, and the passivation layer 62 covers the first transparent electrodes 54a, the second transparent electrodes 54b, the insulation layer 56, and the second connecting lines 58. The touch-sensing structure 24 is electrically connected to a flexible printing circuit board 66 or a control IC via metal traces 64. A decorative layer 68 is disposed on the reinforced glass substrate 32 to shield metal traces 64. For example, the decorative layer 68 is disposed on the periphery of the reinforced glass substrate 32 to surround the touch-sensing structure 24 of the cover glass structure 20a or a viewing area of a touch-sensitive display device.

As shown in FIG. 6B, a cover glass structure 20b includes a reinforced glass substrate 32 and a touch-sensing structure 24 formed on the reinforced glass substrate 32. The reinforced glass substrate 32 is formed by etching a machined glass substrate. In this embodiment, the touch-sensing structure 24 has a bridge-island electrode structure, where the passivation layer 62 extends downwardly to reduce the area of the insulation layer 56, and the via holes T are provided between the passivation layer 62 and the insulation layer 56.

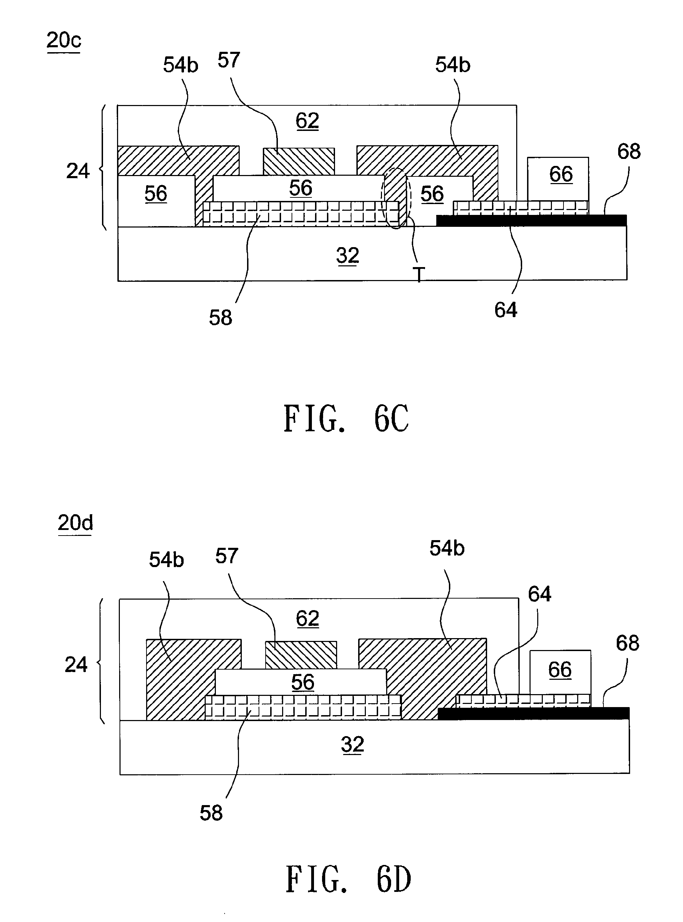

As shown in FIG. 6C, a cover glass structure 20c includes a reinforced glass substrate 32 and a touch-sensing structure 24 formed on the reinforced glass substrate 32. The reinforced glass substrate 32 is formed by etching a machined glass substrate. In this embodiment, the touch-sensing structure 24 has an underground-via electrode structure. Multiple first transparent electrodes 54a (not shown) are connected with each other by multiple first connecting lines 57, and multiple second transparent electrodes 54b are connected with each other by multiple second connecting lines 58. The first connecting lines 57 and the second transparent electrodes 54b are formed on the insulation layer 56, the second connecting lines 58 is formed below the insulation layer 56, and the insulation layer 56 is provided with the via holes T.

Referring to FIG. 6D, a cover glass structure 20d includes a reinforced glass substrate 32 and a touch-sensing structure 24 formed on the reinforced glass substrate 32. The reinforced glass substrate 32 is formed by etching a machined glass substrate. In this embodiment, the touch-sensing structure 24 has an underground-island electrode structure. Multiple first transparent electrodes 54a (not shown) are connected with each other by multiple first connecting lines 57, and multiple second transparent electrodes 54b are connected with each other by multiple second connecting lines 58. The first connecting lines 57 are formed on the insulation layer 56, and the second connecting lines 58 are formed below the insulation layer 56.

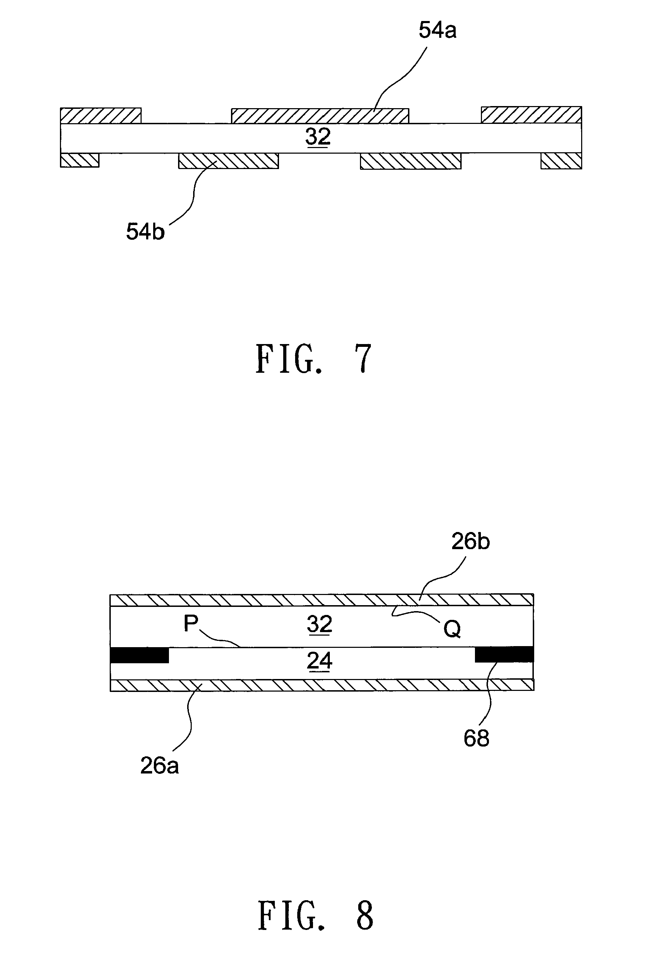

Note all layers of the touch-sensing structure 24 are not limited to be formed on the same side of the reinforced glass substrate 32. For example, as shown in FIG. 7, multiple first sensing series (including multiple first transparent electrodes 54a) and multiple second sensing serious (including multiple second transparent electrodes 54b) are respectively disposed on two opposite sides of the reinforced glass substrate 32 to form a double-sided ITO (DITO) electrode structure. Further, in an alternate embodiment shown in FIG. 8, the touch-sensing structure 24 is formed on a first side P of the reinforced glass substrate 32, and a functional film 26a may be disposed on the first side P of the reinforced glass substrate 32 (the same side as the touch-sensing structure 24). Further, a functional film 26b may be disposed a second side Q of the reinforced glass substrate 32 opposite the touch-sensing structure 24. For example, the functional film 26a may be an anti-reflection film, a polyethylene terephthalate (PET) film, or a hard coat film. Besides, the functional film 26b may be a polarizing sheet, an optical filter, an anti-glare film, an anti-reflection film, a polyethylene terephthalate film, or a hard coat film.

According to the above embodiments, the material of the decorative layer 68 may include at least one of diamond-like carbon, ceramic, colored ink, resin and photo resist. Further, the reinforced glass structure may serve as a glass substrate of a liquid crystal display, an organic light-emitting diode display, an electro-wetting display, a bi-stable display, an electrophoretic display, a touch panel, an electronic device, etc.

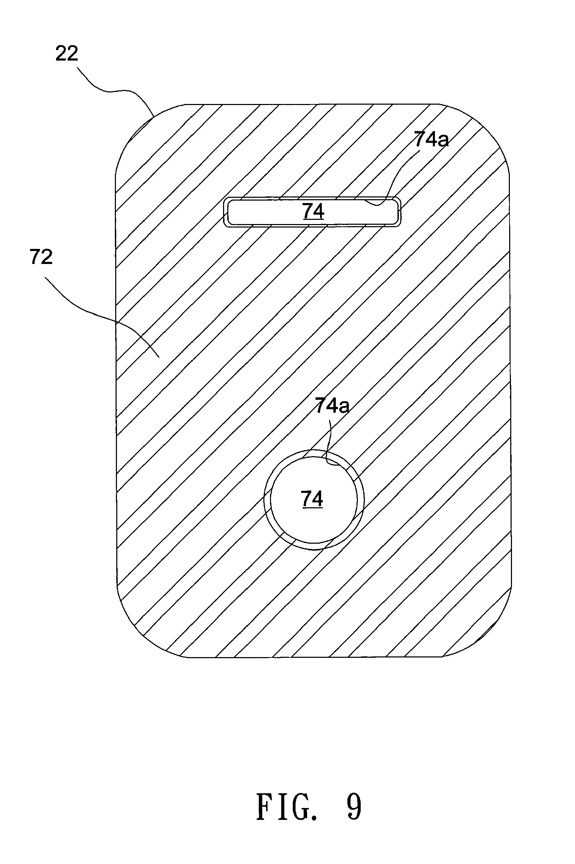

According to an embodiment of the invention, a fabrication method of a cover glass structure may include the following steps. First, a touch-sensing structure and a decorative layer are formed on a glass substrate, and then machining processes are performed on the glass substrate. The machining processes may include, but not limited to, cutting, edging and chamfering the glass substrate. Thereafter, the periphery of the machined glass substrate (a cutting section) is etched to eliminate tiny cracks formed on the periphery of the machined glass substrate. Further, a barrier layer may be additionally formed on a surface of the glass substrate not necessary to be etched to serve protection purposes. The etching time and etching rate may be estimated to optimize an etching depth on the cutting section. For example, as shown in FIG. 9, a barrier layer 72 is formed on a glass substrate 22 where at least one hole 74 is provided. The hole 74 may be a earphone hole, a button hole, an infrared-sensor hole, etc. The hole 74 may be roughly formed by drilling or boring first and then subject to chamfering or grinding treatments to obtain a definite shape for a specific purpose. Therefore, after these machining processes are performed, tiny cracks may be formed on the side wall 74a defining the hole 74, and the glass substrate 22 being bent or warped may break through these cracks. Under the circumstance, the cracks formed on the side wall 74a defining the hole 74 may be also removed by etching to further increase the strength of the glass substrate 22, and the barrier layer 72 may cover an area not necessary to be etched of the glass substrate 22 and prevent the area from etching to serve protection purposes. The material of the barrier layer 72 is not limited, as long as the effect of resisting an etchant is provided. For example, the barrier layer 72 may include acid-resisting films, photo resist, or ink. Further, in one embodiment, the barrier layer 72 may be provided on an entire surface of the glass substrate 22 before the hole 74 is formed. In an alternate embodiment, the barrier layer 72 may be provided on the glass substrate 22 after the hole 74 is formed. Besides, during the etching process, a turbulent flow may be induced near the hole 74 to enhance the etching effect on the side wall 74a defining the hole 74.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the present disclosure is intended to be dedicated to the public regardless of whether the element or component is explicitly recited in the following claims. Each of the terms "first" and "second" is only a nomenclature used to modify its corresponding elements. These terms are not used to set up the upper limit or lower limit of the number of bumps.

## Claims

1. A cover glass structure, comprising:
a glass substrate having at least one cutting section, wherein the cutting section is etched to form an etched structure;
a touch-sensing structure disposed on the glass substrate; and
a decorative layer disposed on the glass substrate.

2. The cover glass structure as claimed in claim 1, wherein the decorative layer is disposed on the periphery of the glass substrate.

3. The cover glass structure as claimed in claim 1, wherein the touch-sensing structure comprises a plurality of electrodes apart from each other.

4. The cover glass structure as claimed in claim 1, wherein the touch-sensing structure comprises a plurality of first sensing series and a plurality of second sensing series spaced apart from the first sensing series.

5. The cover glass structure as claimed in claim 4, wherein each of the first sensing series comprises a plurality of first electrodes connected with each other by a plurality first connecting lines, and each of the second sensing series comprises a plurality of second electrodes connected with each other by a plurality of second connecting lines.

6. The cover glass structure as claimed in claim 5, wherein the first electrodes and the second electrodes are composed of at least one of a conductive layer, a metal mesh layer and a nanowire layer.

7. The cover glass structure as claimed in claim 1, further comprising:
at least one functional film disposed on at least one side of the glass substrate, wherein the functional film comprises at least one of a polarizing sheet, an optical filter, an anti-glare film, an anti-reflection film, a polyethylene terephthala film and a hard coat film.

8. The cover glass structure as claimed in claim 1, further comprising:
a passivation layer formed on one side of the touch-sensing structure opposite the glass substrate.

9. The cover glass structure as claimed in claim 1, wherein the etched structure comprises a plurality of notch structures, and each of the notch structures has an arc-shaped or a tooth-shaped profile.

10. The cover glass structure as claimed in claim 9, wherein the radius of each of the notch structures is in the range of 10µm to 150µm.

11. The cover glass structure as claimed in claim 1, wherein the etched structure is formed by the erosion of a dry-etching agent or a wet-etching agent, the dry-etching agent comprises a fluorine-containing gas or plasma, and the wet-etching agent comprises hydrofluoric acid or a fluorine-containing solvent.

12. The cover glass structure as claimed in claim 1, wherein the touch-sensing structure comprises a plurality of first sensing traces and a plurality of second sensing traces respectively formed on two opposite sides of the glass substrate.

13. A fabrication method of a cover glass structure, comprising the steps of:
forming a touch-sensing structure and a decorative layer on a glass substrate;
performing machining processes on the glass substrate; and
etching the periphery of the machined glass substrate to eliminate cracks formed on the periphery of the machined glass substrate.

14. The fabrication method as claimed in claim 13, wherein the machining processes comprises at least one of cutting, edging, drilling, boring and chamfering the glass substrate.

15. The fabrication method as claimed in cliam 13, wherein the machining processes comprises forming at least one hole on the glass substrate, and a side wall defining the hole is etched to eliminate cracks formed on the side wall.

16. A touch-sensitive display device, comprising:
a display panel; and
a cover glass structure according to one of the claims 1 to 12 attached to the display panel.
